Europäisches Patentamt

European Patent Office

Office européen des brevets

(11) Publication number: **0 061 352**
**B1**

(12) **EUROPEAN PATENT SPECIFICATION**

(45) Date of publication of patent specification: **27.12.84**

(21) Application number: **82301542.5**

(22) Date of filing: **24.03.82**

(51) Int. Cl.³: **B 23 K 26/00, B 29 C 27/02**

(54) Apparatus for cutting and/or welding laminar thermoplastics material.

(30) Priority: **25.03.81 GB 8109428**

(43) Date of publication of application:
**29.09.82 Bulletin 82/39**

(45) Publication of the grant of the patent:
**27.12.84 Bulletin 84/52**

(84) Designated Contracting States:
**AT BE CH DE FR IT LI LU NL SE**

(56) References cited:
**DE-A-2 544 371**
**US-A-3 909 582**

(73) Proprietor: **A.J. BINGLEY LIMITED**
**210-212 Broomhill Road**
**Brislington Bristol BS4 5RW (GB)**

(72) Inventor: **Taylor, Arthur Frederick David**
**Sylvester**
**Tudor Cottage Lamborough Hill**
**Abingdon Oxfordshire (GB)**

(74) Representative: **Cross, Rupert Edward Blount**
**et al**
**BOULT, WADE & TENNANT 27 Furnival Street**
**London EC4A 1PQ (GB)**

Courier Press, Leamington Spa, England.

## Description

The present invention is concerned with apparatus for cutting and/or welding laminar thermoplastics material. The invention is particularly concerned with apparatus for longitudinally cutting and/or welding an elongate web made of such material.

Plastics film material, for example, high density and low density polyethylene films, are commonly made by extrusion in the form of a continuous tube of the film. Extrusion machines for forming film in this way are well-known. In the extrusion process, hot film material in a plastic state is extruded from an annular die in a continuous tube and is then expanded in a "bubble" to an increased diameter of tube before the material of the film sets. The expanded set tube of film is then collapsed to form a double layer continuous strip or web of predetermined width. The web is then usually collected on a roller.

It is sometimes convenient to slit the layers of the web longitudinally before the web is rolled up. Hitherto this has been done with fixed blades slitting the moving web during the extrusion process.

However, such fixed blades do not always perform satisfactorily. They become fouled and can snag on the web producing poor quality edges to the cuts, or even damaging and making unusable the entire extruder output. The alignment of the knife is critical and it requires frequent cleaning and replacement or sharpening. Furthermore, it will be appreciated that slitting a collapsed tubular web produces two webs of half the width but each joined along only one edge, the original outside edge.

In DE—A1—2544371 there is disclosed apparatus for longitudinally cutting and/or welding an elongate web of laminar thermoplastics material, comprising a work station; means for transporting the web longitudinally through the work station; a laser; means to direct radiation from the laser onto one face of the web at the work station to cut and/or weld the material of the web; support means mounted at the work station and arranged to make intimate contact with the other face of the web at least in a region where the laser radiation is directed onto said one face of the web, at least the surface portion of the support means which in use makes contact with said region being formed of a material having a high coefficient of absorption for the wavelength of the radiation from the laser, a low thermal diffusivity and good resistance to thermal shock.

According to this invention there is provided apparatus for longitudinally cutting and/or welding an elongate web of laminar thermoplastics material, comprising a work station; means for transporting the web longitudinally through the work station; a laser; means to direct radiation from the laser onto one face of the web at the work station to cut and/or weld the material of the web; support means mounted at the work station and arranged to make intimate contact with the other face of the web at least in a region where the laser radiation is directed onto said one face of the web, at least the surface portion of the support means which in use makes contact with said region being formed of a material having a high coefficient of absorption for the wavelength of the radiation from the laser, a low thermal diffusivity and good resistance to thermal shock, characterised in that the support means comprises a roller mounted for rotation about an axis perpendicular to the direction of transport of the web through the work station, and to roll with the web with substantially no sliding contact therewith, the roller having at least one axially extending circumferential gap in its supporting surface whereby the web where it bridges the gap tends to be distorted radially of the roller into the gap thereby to exert a tensioning force on the web acting axially of the roller.

The use of support means in the form of a roller mounted for rotation about an axis perpendicular to the direction of transport of the web through the work station, and to roll with the web with substantially no sliding contact therewith, is known from US—A—3909582.

A difficulty with arises when using a roller as the supporting means is that the web tends to crinkle under the heating action of the laser radiation.

Tensioning of the web as provided in apparatus according to this invention assists in preventing crinkling of the web passing over the roller thereby ensuring good intimate contact between the web and the roller.

This arrangement has been found markedly to increase the efficiency with which the laser energy is utilised in the cutting and/or welding operation. A commonly used powerful laser which is especially convenient for use in the apparatus of this invention is one using carbon dioxide gas as the lasing medium, the radiation emitted by the laser having a wavelength of 10.6 $\mu$m.

Preferably, said radiation directing means is arranged to form a line focus on the web at the work station with the line extending in the direction of transport of the web.

If such a line focus is tapered at at least one end, the radiation can simultaneously cut through the laminar thermoplastics material over the roller and also weld together two layers of the material adjacent the cut. The apparatus of the present invention when applied to tube material from a typical extruder, forms two smaller tubes from one single tube by cutting and welding the tube longitudinally.

Preferably, the roller is located and arranged so that the web is deviated thereby sufficiently to be in intimate contact therewith over a circumferential distance greater than the longitudinal extent along the web of the incident laser radiation.

This measure also assists in ensuring tension in the web which pulls the web into firm intimate contact with the roller and especially said surface portion thereof formed of the radiation absorbing material.

Preferably the gap in the roller is fairly narrow, for example, between 0.2 cm and 2 cm wide, whereby the gap produces an insignificant permanent distortion of the web and does not therefore affect its subsequent usefulness.

Conveniently, the roller has two gaps on opposite sides of said surface portion of the roller.

In one arrangement, at least said surface portion of the roller is force cooled, i.e. is cooled positively by forced circulation of a cooling medium. The roller may be hollow at least under said surface portion and may then be water cooled internally.

The apparatus preferably includes gas jet means arranged to direct a gas jet onto said one face of the web immediately in front of the area of incidence of the laser radiation.

This gas jet serves two purposes. One purpose is to disperse any smoke arising from cutting and/or welding the thermoplastics material of the web which might otherwise obscure the incident laser radiation. The other purpose is to assist further in smoothing out the thermoplastics web on the surface of the roller immediately in front of the area of incidence of the laser radiation.

Preferably said gas jet is fan-shaped in a plane perpendicular to the direction of transport of the web with the centre of the fan substantially in line with the centre of the area of incidence of laser radiation.

An example of the present invention will now be described with reference to the accompanying drawings in which:

Figure 1 illustrates apparatus embodying the present invention viewed along the axis of rotation of the roller of the apparatus;

Figure 2 is a further partial view of the apparatus of Figure 1 looking along the axis of the laser beam impinging on the plastics web material;

Figure 3 is a detailed view partially in cross-section of the roller of the apparatus of Figures 1 and 2 illustrating the surface portion thereof formed of the laser radiation absorbing material;

Figure 4 illustrates the shape of the focus of the laser radiation on the plastics web material being cut and/or welded;

Figure 5 illustrates in detail the form of a fan-shaped gas jet directed at the plastics material; and

Figure 6 illustrates the electrical control and interlock circuitry for the laser of the apparatus.

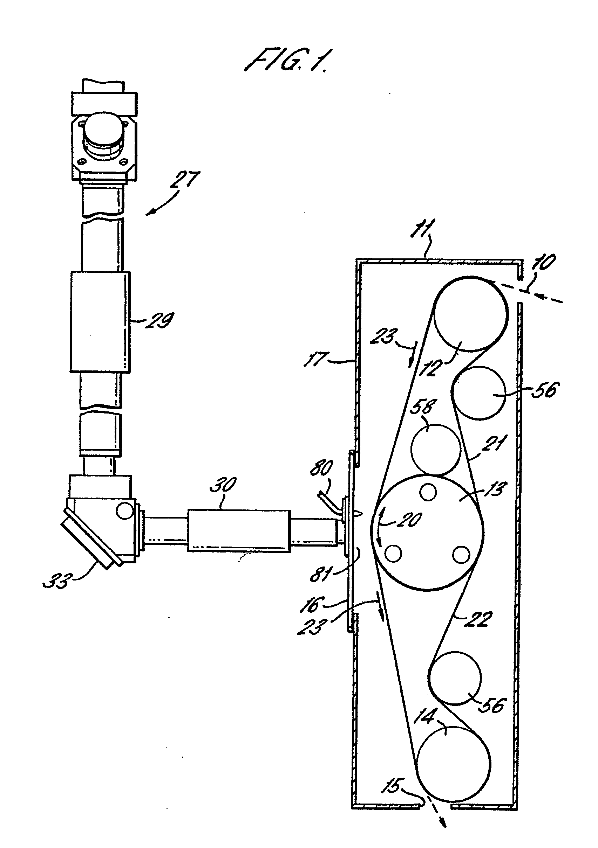

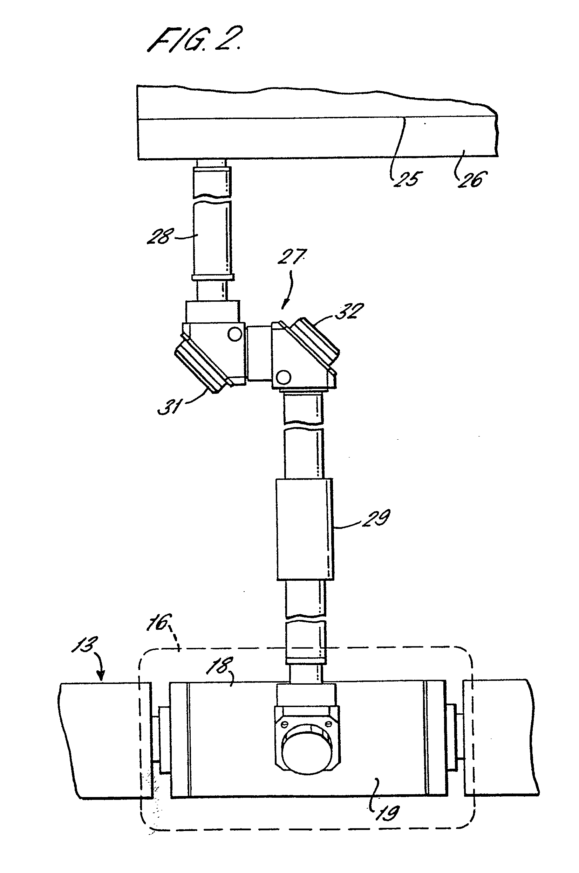

Referring to Figures 1 and 2, an elongate plastics film web 10 is fed into a box 11. The web 10 may typically comprise polyethylene film and may be fed to the box 11 directly from an extruder (not shown) for forming the film. In one example, the plastics material is high density polyethylene film formed on the extruder as a tube which is then collapsed to form the web 10 with two superimposed layers joined together along the longitudinal edges of the web.

The web 10 is fed under tension over three rollers 12, 13 and 14 mounted for rotation inside the box 11. The rollers 12, 13 and 14 extend substantially the full width of the web 10 and are substantially uniform axially over the full width. The web 10 is supported by the rollers so as to be transported inside the box 11 in the direction of arrows 23 over each roller in turn and then to leave the box 11 by an exit aperture 15.

The central roller 13 is mounted for rotation symmetrically between the roller 12 and 14 and has a larger diameter than rollers 12 and 14. The roller 13 is mounted substantially mid way in the box 11 behind a transparent, typically perspex, window 16 in a front face 17 of the box. As shown in Figure 2, the roller 13 is formed of a plurality of axial sections. In the present example, the roller 13 has a section 18 mid-way along its length which has its cylindrical surface 19 made of a siliceous refractory material, e.g. quartz. Thus, as the film web 10 is transported through the box 11 past the central roller 13 the part across the width of the web which engages the central section 18 of the roller comes into contact with the quartz surface 19. The rollers 12 and 14 are arranged relative to roller 13 so that the web 10 is deviated along its length by the roller 13 so that the web is in contact with the surface 19 over a finite circumferential distance 20 around the roller.

The rollers 12, 13 and 14 are interconnected with one another by belts 21 and 22 to ensure that all three rollers in contact with the web 10 rotate at corresponding speeds to minimise any slippage between the roller 13 and the web 10. In the present example, the rollers 12, 13 and 14 are driven by movement of the web 10 itself through the box 11. It will be appreciated that the web 10 emerging from the box through the aperture 15 is fed to a collecting roll (not shown) which is driven to haul the web through the box 11. Where the web 10 is derived directly from an extruder, the haul-off on the collecting roll is also effective to draw the molten plastics material from the extruder die and through the extruding machine.

A laser is provided mounted in a box 25 (Figure 2). The laser is preferably a carbon dioxide laser such as that manufactured by Ferranti under the designation MF400. In the example illustrated in Figures 1 and 2, the apparatus is mounted on an extruding machine for producing the polyethylene film web 10. The laser is mounted on the extruding machine on a pallet 26 at a position above the roller box 11.

Radiation from the laser is emitted directed downwards into a guide tube arrangement 27. The guide tube arrangement 27 comprises a number of axially extendable sleeve sections 28, 29 and 30 interconnected by elbow assemblies 31, 32 and 33. Each elbow assembly has a plane mirror for reflecting the laser radiation through 90°. Thus, the laser radiation from the laser 25 first enters the tube section 28, is reflected successively in the mirrors of elbow assemblies 31 and 32 and then passes along the tube section 29 to be reflected again through 90° in the elbow assembly 33 into the tube section 30. The arrangement 27 is arranged to conduct the laser radiation from the output head of the laser to direct the laser beam through an aperture provided in the window 16 of the roller box 11 at the film web 10 where it travels over the quartz surface 19 of the central roller portion 18. As will be described in more detail later, the laser energy is arranged to be focused onto the film web 10 supported by the quartz surface 19 so as to cut through the web as the web is transported over the roller. At the same time, the geometry of the focus of the laser radiation can be arranged as will be apparent to weld together the two layers of the film web along the cut edges, thereby forming two smaller tubular webs from the original single tubular web 10.

The conducting assembly 27 for the laser radiation is adjustable to allow the height of the focus of the laser beam on the plastics web over the roller 13 to be adjusted and also the position of the focus axially on the centre portion 18 of the roller. Furthermore, the overall path length for the laser radiation from the laser head to the point of incidence of the film web 10 can be adjusted so as to adjust the area of the focus on the film and the resulting radiation power density.

As mentioned previously, a substantial proportion of the laser radiation emitted by a carbon dioxide laser (at 10.6 $\mu$m) is not absorbed by a relatively thin film of high density polyethylene material. However, the radiation from the laser, passing through the film is absorbed in the surface layers of the quartz surface 19 of the central roller portion 18. It has been found that providing such a quartz backing surface to the polyethylene film when cutting or welding by a carbon dioxide laser greatly increases the efficiency with which the laser energy can be utilised. For example, it has been found that the same cutting or welding operations can be carried out with only one-third of the laser power needed in the absence of a quartz backing material. By providing quartz backing material on the roller section 18 which rotates as the film web to be cut and welded is transported, a good contact can be maintained between the web in the area of incidence of the laser energy and the quartz surface of the roller section, without any sliding contact between the two. In this way, the advantages of providing the quartz backing material can be used to provide a longitudinal cut and/or welded seal on a continuously running web of polyethylene film.

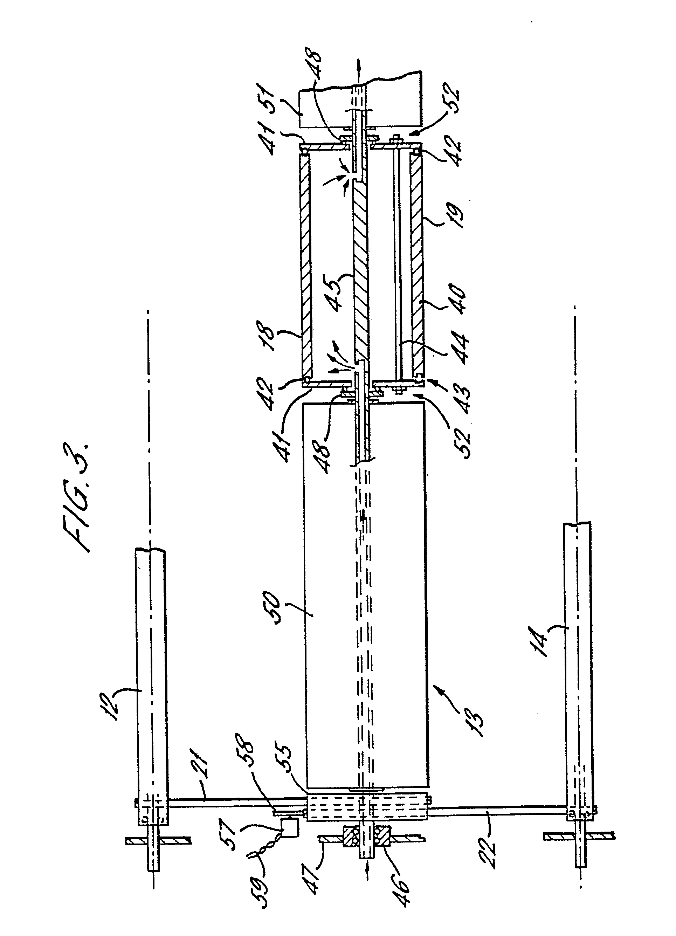

Figure 3 illustrates the arrangement of rollers in the box 11 in greater detail and particularly shows in cross-section the central portion 18 of the roller 13. In Figure 3 only a left-hand end of the rollers 12, 13 and 14 is illustrated. However, it will be appreciated that the portion 18 as illustrated in Figure 3 is in fact central along the length of the complete roller 13. The rollers 12 and 14 are of substantially the same length as the roller 13 and should be slightly longer than the width of the material web 10 to be transported through the box 11.

The central portion 18 of the roller 13 is formed of an open ended hollow cylinder 40 of quartz. The wall thickness of the quartz cylinder 40 is not critical, but it should be large enough to provide sufficient mechanical strength for the cylinder 40 and also to ensure that all laser radiation incident on the outside surface 19 of the cylinder is absorbed. The cylinder 40 is mounted between a pair of circular endplates 41. Elastomeric O-ring seals 42 are provided between the annular end faces of the cylinder 40 and the opposing inner faces of each endplate 41. To locate the O-ring seals 42, the annular end faces of the cylinder 40 are machined to provide an annular groove. Similarly, the inner faces of the plates 41 have an opposing annular groove. The seal 42 is omitted in Figure 3 at 43 to illustrate the shape of the grooves in the opposing faces of the cylinder 40 and endplate 41. The annular groove in the endplate 41 may be of circular section. However, it is more convenient to form the corresponding groove in the annular faces of the cylinder 40 with a rectangular section since this is easier to machine in the quartz material of the cylinder. The seals 42 are seated in the grooves and the two endplates 41 are drawn together by means of a plurality of drawbars 44 distributed symmetrically about the axis of the cylinder 40 and extending axially between the plates 41 to hold the plates together. The drawbars 44 pull the plates 41 together sufficiently to ensure that there is a good fluid tight seal between the plates 41 and the cylinder 40, but to avoid any direct mechanical contact between the quartz of the cylinder 40 and the material, typically stainless steel, of the plates 41. In this way any differential expansion between the plates 41 and the cylinder 40 when the complete roller portion 18 is heated, can be absorbed by deformation of the O-ring seals 42 without excessively stressing the quartz cylinder 40.

The central roller portion 18 is mounted on a shaft 45 which is rotatably mounted in bearings 46 in sidewalls 47 of the roller box 11. The roller portion 18 is fastened to the shaft 45 by means of locking nuts 48 which ensure a good fluid tight seal between the plates 41 and the shaft 45.

On either side of the central roller portion 18, extension portions 50 and 51 are also mounted on the shaft 45. The extension portions 50 and 51 are formed with an exterior cylindrical surface typically of stainless steel and have substantially the same diameter as the central portion 18. The axial length of the complete roller 13 including central portion 18 and extension portions 50 and 51 is made slightly greater than the width of the plastics web to be handled by the machine.

As illustrated in Figure 3, an axial gap 52 is left between the adjacent ends of the central portion 18 and each extension portion 50. This axial gap 52 extends around the periphery of the external surface of the complete roller 13 so that the web material supported by the roller 13 must bridge the gap 52 on either side of the central portion 18. It has been found that these gaps 52 cause the longitudinal tension of the web 10 passing over the roller 13 to cause the web material bridging the gaps to be drawn slightly radially inwards into the gap 52. This radially inward movement in turn produces a tensioning of the web material axially along the roller 13 on either side of each gap 52. This axial tensioning, across the width of the web 10, assists in removing any crinkles in the portion of the web passing over the quartz surface 19 of the roller 18 thereby ensuring good intimate contact between the web and the surface 19. The size of the gap 52 is not critical. A very small gap will have an insignificant effect, whereas if the gap is too large excessive stretching of the plastics film material is caused which renders the film unusable in subsequent processing, e.g. bag making. Gap widths between 0.2 cm and 2 cm are feasible and in a preferred arrangement gap widths of 1 cm are used on a roller 13 of diameter 60 cm.

Figure 3 also illustrates in more detail, the arrangement of belts 21 and 22 interconnecting the rollers 12, 13 and 14. A double pulley 55 is provided mounted on the shaft 45 at the end of the roller 13 and the first belt 21 links the pulley 55 with the upper roller 12, whereas the second belt 22 links the pulley with the lower shaft 14. As shown in Figure 1, the belts 21 and 22 are tensioned by respective idler pulleys 56. A rotation sensor 57 is also mounted inside the box 11 with a sensing wheel 58 engaging the outer surface of the belt 22. The rotation sensor 57 operates to provide a signal on lines 59 when the roller 13 with pulley 15 is rotating. This rotation signal is used in the control circuitry of the laser apparatus as will be described later.

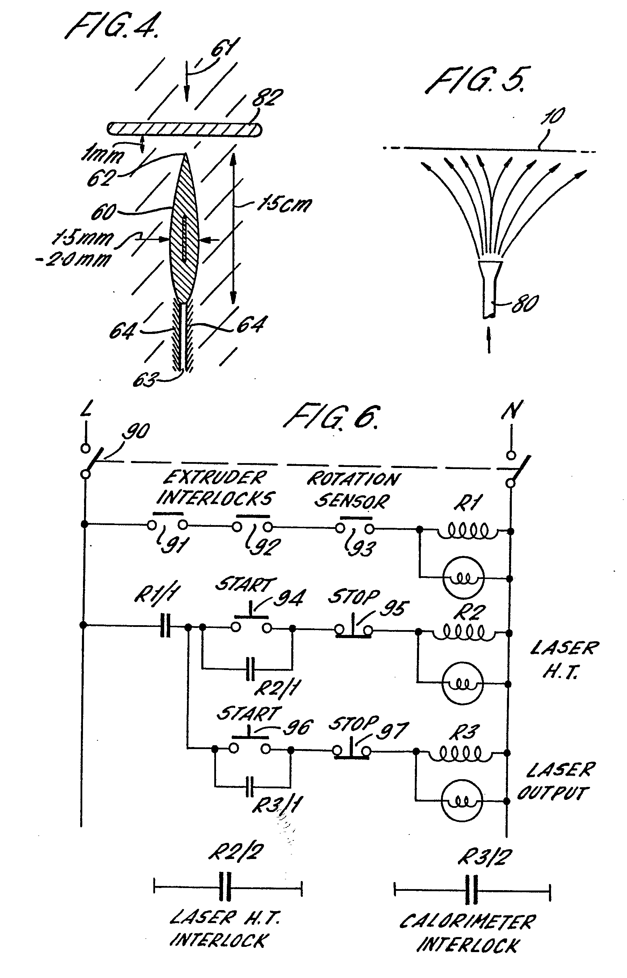

Referring now to Figure 4, the profile 60 of the focus of the laser beam on the plastics film material is illustrated. The focus is a substantially line focus with its axis along the direction of transport of the film as indicated by an arrow 61. The line focus can be produced by any known technique but is conveniently formed in the described example by using a cylindrical mirror in the elbow assembly 33. The axis of the cylinder of the mirror in the elbow 33 is arranged in the plane of the direction of transport of the film so as to focus the laser beam laterally, i.e. transversely of the direction of transport into the line of focus. By adjusting the distance between the elbow assembly 33 and the film web by means of the sleeve 30, the beam can be focused to a sharp point or edge at one end 62 of the line focus, whereas the other end is relatively rounded in profile.

With the elongate focus profile as illustrated, the laser can be used to cut right through the layers of the film web along the centre line of the line focus where the film is exposed to a maximum total amount of energy during passage through the focus. Thus, a cut 63 is formed in the two layers of film. Immediately adjacent the cut edges of the film, the film material is exposed to a relatively lesser amount of energy but sufficient to weld the two layers of the film together as illustrated by welds 64.

In a preferred example, the focus 60 has a length of about 1.5 cm and a maximum width of between 1.5 and 2 mm. The focus tapers at the pointed end 62 to a maximum width of about .25 mm.

Referring again to Figure 1, a gas jet 80 is mounted immediately adjacent the exit aperture 81 of the sleeve 30 where the laser beam enters the box 11. The jet 80 is connected to a source of compressed air (not shown in Figure 1) and is arranged to direct a jet of air at the film web 10 where it engages the quartz surface 19 of the roller 13. As illustrated in Figure 5, the jet 80 is arranged to produce a fan-shaped jet of air in a plane substantially perpendicular to the direction of transport of the film, and to the axis of the line focus 60. The fan is centered perpendicularly on the axis of the line focus 60 and serves to blow or press the film onto the surface 19 of the roller immediately in front of the focus. The profile of the gas jet impinging on the film is illustrated at 82 in Figure 4. In the described example, the jet impinges on the film material about 1 mm in front of the sharp edge 62 of the focus.

Referring now to Figure 6, electrical control circuitry for the laser is illustrated. The control circuitry includes an isolating switch 90 which closes to energise a first relay R1 if three sensor switches 91, 92 and 93 are closed. Switches 91 and 92 are interlock switches provided on the extruding machine with which the laser cutting and welding apparatus is being used. The interlocks are closed only if the extruding machine is operating correctly producing the film web 10. The third switch 93 is responsive to the rotation sensor 57 and is closed only if the roller 13 is rotating, indicating that web 10 is being transported over the roller ready for cutting and welding by the laser. When relay R1 is energised, a relay R2 can be energised by depressing a start button 94. Relay R2 has one set of contacts R2/1 in parallel with the start button 94 to hold the relay on when energised. The relay R2 can be de-energised subsequently by depressing a stop button 95. The relay R2 has a second set of contacts R2/2 which are connected to operate the high tension interlock of the laser to supply H.T. voltage to the laser to begin the lasing action. However, the laser of the present embodiment has a shutter arrangement comprising a calorimeter which can be moved into the output beam of the laser to absorb and dissipate the energy of the beam. A second start button 96 energises a third relay R3 which again has one set of contacts R3/1 arranged to hold the relay on when energised. On energising relay R3, a second set of its contacts R3/2 are energised to operate a calorimeter interlock in the laser apparatus which opens the laser shutter or removes the calorimeter from the laser beam. The beam can then emerge from the laser box 25 along the guide arrangement 27 to start the cutting and welding process. The beam can be shut off by depressing STOP button 97 to de-energise relay R3. Relay R3 may also be arranged to operate warning lights positioned on the apparatus to indicate that the laser is firing.

In the arrangement described above, a single longitudinal cut is made producing two smaller tubes of film from one wide web 10. However the apparatus can be modified to produce two or more longitudinal parallel cuts and/or welds simultaneously, thereby forming three or more tubes from one original film tube. A single laser may be employed with its beam split into two or more separate beams incident on the film web. Separate axial portions of the roller 13 may be provided with quartz surfaces to back the film web behind each incident laser beam.

**Claims**

1. Apparatus for longitudinally cutting and/or welding an elongate web (10) of laminar thermoplastics material, comprising a work station (11); means (12, 13, 14) for transporting the web (10) longitudinally through the work station (11); a laser (25); means (27) to direct radiation from the laser (25) onto one face of the web (10) at the work station (11) to cut and/or weld the material of the web (10); support means (13) mounted at the work station (11) and arranged to make intimate contact with the other face of the web (10) at least in a region where the laser radiation is directed onto said one face of the web (10), at least the surface portion of the support means (13) which in use makes contact with said region being formed of a material having a high coefficient of absorption for the wavelength of the radiation from the laser (25), a low thermal diffusivity and good resistance to thermal shock, characterised in that the support means (13) comprises a roller (13) mounted for rotation about an axis perpendicular to the direction of transport of the web (10) through the work station (11), and to roll with the web (10) with substantially no sliding contact therewith, the roller (13) having at least one axially extending circumferential gap (52) in its supporting surface whereby the web (10) where it bridges the gap (52) tends to be distorted radially of the roller (13) into the gap (52) thereby to exert a tensioning force on the web (10) acting axially of the roller (13).

2. Apparatus as claimed in claim 1, characterised in that the laser (25) is a $CO_2$ laser radiating at 10.6 $\mu$m.

3. Apparatus as claimed in claim 1 or claim 2, characterised in that the radiation directing means (27) is arranged to form a line focus on the web (10) at the work station (11) with the line extending in the direction of transport of the web (10).

4. Apparatus as claimed in any preceding claim, characterised in that the roller (13) is located and arranged so that the web (10) is deviated thereby sufficiently to be in intimate contact therewith over a circumferential distance greater than the longitudinal extent along the web (10) of the incident laser radiation.

5. Apparatus as claimed in any preceding claim, characterised in that the gap (52) is between 0.2 cm and 2 cm wide.

6. Apparatus as claimed in any preceding claim, characterised in that the roller (13) has two gaps (52) on opposite sides of said surface portion of the roller (13).

7. Apparatus as claimed in any preceding claim, characterised in that at least said surface portion of the roller (13) is force cooled.

8. Apparatus as claimed in claim 1, characterised in that the roller (13) is hollow at least under said surface portion and is water cooled internally.

9. Apparatus as claimed in any preceding claim, characterised by gas jet means (80) arranged to direct a gas jet onto said one face of the web (10) immediately in front of the area of incidence of the laser radiation.

10. Apparatus as claimed in claim 9, characterised in that the gas jet from said gas jet means (80) is fan-shaped in a plane perpendicular to the direction of transport of the web (10) with the centre of the fan substantially in line with the centre of the area of incidence of the laser radiation.

11. Apparatus as claimed in any preceding claim, characterised in that the roller (13) comprises at least one cylinder (18) of siliceous refractory material mounted on metal supporting means (41), with resilient mounting means (42) interconnecting the refractory material of the cylinder (18) and the metal supporting means (41) to absorb any differential expansion between the refractory material and the metal when the roller (13) is heated, without stressing the refractory material excessively.

## Patentansprüche

1. Vorrichtung zum Schneiden und/oder Schweißen einer länglichen Materialbahn (10) aus flächigem thermoplastischen Material in Längsrichtung, die aufweist: eine Arbeitsstation (11); Einrichtungen (12, 13, 14) zum Transportieren der Materialbahn (10) in Längsrichtung durch die Arbeitsstation (11); einen Laser (25); Einrichtungen (27) zum Richten von Strahlung vom Laser (25) auf eine Oberfläche der Materialbahn (10) an der Arbeitsstation (11) zum Schneiden und/oder Schweißen des Materials der Materialbahn (10); Stützeinrichtungen (13), die in der Arbeitsstation (11) befestigt sind und so angeordnet sind, daß sie innige Berührung mit der anderen Fläche der Materialbahn (10) wenigstens in einem Bereich machen, in dem die Laserstrahlung auf die genannte eine Fläche der Materialbahn (10) gerichtet wird, wobei wenigstens der Oberflächenteil der Stützeinrichtungen (13), der bei seiner Benutzung Berührung mit diesem Bereich macht, aus einem Material besteht, das einen hohen Absorbtionskoeffizienten für die Wellenlänge der Strahlung von Laser (25) hat, das wenig die Wärme die verteilt und eine gute Widerstandsfähigkeit gegenüber Wärmeschocks hat, dadurch gekennzeichnet, daß die Stützeinrichtungen (13) eine Walze (13) aufweisen, die für eine Drehbewegung um eine Achse befestigt ist, die senkrecht zur Richtung des Transports der Materialbahn (10) durch die Arbeitsstation (11) steht, und die mit der Materialbahn (10) unter Berührung im wesentlichen ohne Gleitbewegung zwischen beiden sich dreht, wobei die Walze (13) wenigstens eine sich in Axialrichtung erstreckende Umfangsausnehmung (52) in ihrer Sützfläche hat, wobei die Materialbahn (10) an der Stelle, an der sie die Ausnehmung (52) überbrückt, dazu tendiert, in Radialrichtung der Walze (13) in die Ausnehmung (52) verformt zu werden, wodurch eine spannende Kraft auf die Materialbahn (10) ausgeübt wird, die in Axialrichtung der Walze (13) wirkt.

2. Vorrichtung nach Anspruch 1, dadurch gekennzeichnet, daß der Laser (25) ein $CO_2$-Laser ist, der bei 10,6 $\mu$m Strahlung abgibt.

3. Vorrichtung nach Anspruch 1 oder 2, dadurch gekennzeichnet, daß die die Strahlung richtenden Einrichtungen (27) so angeordnet sind, daß sie eine Brennlinie auf der Materialbahn (10) an der Arbeitsstation (11) bilden, wobei sich die Linie in der Transportrichtung der Materialbahn (10) erstreckt.

4. Vorrichtung nach einem der vorangehenden Ansprüche, dadurch gekennzeichnet, daß die Walze (13) so angeordnet und ausgebildet ist, daß die Materialbahn (10) durch dieselbe in ausreichendem Maße abgelenkt wird, daß sie in enger Berührung mit derselben über eine Umfansentfernung ist, die größer ist als die Längsausdehnung der einfallenden Laserstrahlung entlang der Materialbahn (10).

5. Vorrichtung nach einem der vorangehenden Ansprüche, dadurch gekennzeichnet, daß die Ausnehmung (52) zwischen 0,2 cm und 2 cm breit ist.

6. Vorrichtung nach einem der vorangehenden Ansprüche, dadurch gekennzeichnet, daß die Walze (13) zwei Ausnehmungen (52) auf entgegengestzten Seiten des genannten Oberflächenbereiches der Walze (13) aufweist.

7. Vorrichtung nach einem der vorangehenden Ansprüche, dadurch gekennzeichnet, daß wenigstens ein Oberflächenbereich der Walze (13) zwangsgekühlt ist.

8. Vorrichtung nach Anspruch 1, dadurch gekennzeichnet, daß die Walze (13) wenigstens unter dem genannten Oberflächenbereich hohl ist und innen wassergekühlt ist.

9. Vorrichtung nach einer der vorangehenden Ansprüche, gekennzeichnet durch Gasstrahleinrichtungen (80), die so angeordnet sind, daß sie einen Gasstrahl auf die genannte eine Fläche der Materialbahn (10) unmittelbar for dem Gebiet richten, in dem die Laserstrahlung einfällt.

10. Vorrichtung nach Anspruch 9, dadurch gekennzeichnet, daß der Gasstrahl von den Gasstrahleinrichtungen (80) fächerförmig in einer Ebene senkrecht zur Transportrichtung der Materialbahn (10) ist, wobei das Zentrum des Fächers im wesentlichen mit dem Zentrum des Bereiches ausgerichtet ist, in dem die Laserstrahlung einfällt.

11. Vorrichtung nach einem der vorangehenden Ansprüche, dadurch gekennzeichnet, daß die Walze (13) wenigstens einen Zylinder (18) aus einem siliciumhaltigen widerstandsfähigen Material aufweist, der auf Stützeinrichtungen (41) aus Metall befestigt ist, wobei nachgiebige Befestigungseinrichtungen (42) das widerstandsfähige Material des Zylinders (18) und die Stützeinrichtungen (41) aus Metall verbinden, um irgendwelche differentielle Ausdehnung zwischen dem widerstandsfähigen Material und dem Metall zu absorbieren, wenn die Walze (13) erhitzt wird, ohne daß das widerstandsfähige Material übermäßig unter Spannung gesetzt wird.

## Revendications

1. Appareil pour couper et/ou souder longitudinalement une bande allongée (10) en matière thermoplastique lamellaire, comprenant un poste de travail (11), des moyens (12, 13, 14) destinés à transporter la bande (10) longitudinalement à travers le poste de travail (11); un laser (25); des moyens (27) destinés à diriger le rayonnement du laser (25) sur une première face de la bande (10), dans le poste de travail (11) pour couper et/ou souder la matière de la bande (10); des moyens (13) de support montés dans le poste (11) de travail et agencés pour établir un contact intime avec l'autre face de la bande (10) au moins dans une zone où le rayonnement laser est dirigé sur làdite première face de la bande (10), au moins la partie de la surface des moyens (13) de support qui, lors de l'utilisation, établit un contact avec ladite zone, étant formée d'une matière ayant un coefficient élevé d'absorption pour la longueur d'onde du rayonnement provenant du laser (25), une faible diffusibilité thermique et une bonne résistance aux chocs thermiques, caractérisé en ce que les moyens (13) de support comprennent un rouleau (13) monté de façon à pouvoir tourner sur un axe perpendiculaire à la direction de transport de la bande (10) à travers le poste (11) de travail, et pour rouler avec la bande (10), pratiquement sans contact de glissement avec elle, la surface de support du rouleau (13) présentant au moins un intervalle circonférentiel (52) s'étendant axialement de manière que la bande (10), où elle recouvre l'intervalle (52), tende à être déformée radialement au rouleau (13), vers l'intérieur de l'intervalle (52), afin qu'ine force de tension soit exercée sur la bande (10), axialement au rouleau (13).

2. Appareil selon la revendication 1, charactérisé en ce que le laser (25) est un laser au $CO_2$ rayonnant à 10,6 $\mu$m.

3. Appareil selon la revendication 1 ou la revendication 2, caractérisé en ce que les moyens (27) dirigeant le rayonnement sont conçus pour former un foyer linéaire sur la bande (10) dans le poste (11) de travail., la ligne s'étendant dans la direction de transport de la bande (10).

4. Appareil selon l'une quelconque des revendications précédentes, caractérisé en ce que le rouleau (13) est disposé et agencé de manière qu'il dévie suffisamment la bande (10) pour établir un contact intime avec elle sur une distance circonférentielle supérieure à la distance sur laquelle le rayonnement laser incident s'étend longitudinalement sur la bande (10).

5. Appareil selon l'une quelconque des revendications précédentes, caractérisé en ce que l'intervalle (52) présente une largeur comprise entre 0,2 cm et 2 cm.

6. Appareil selon l'une quelconque des revendications précédentes, caractérisé en ce que le rouleau (13) présente deux intervalles (52) situés sur des côtés opposés de ladite partie de surface du rouleau (13).

7. Appareil selon l'une quelconque des revendications précédentes, caractérisé en ce qu'au moins ladite partie de surface du rouleau (13) est refroidie à force.

8. Appareil selon la revendication 1, caractérisé en ce que le rouleau (13) est creux, au moins au-dessous de ladite partie de surface et est refroidi intérieurement par eau.

9. Appareil selon l'une quelconque des revendications précédentes, caractérisé par des moyens (80) à ajutage de gaz agencés pour diriger un jet de gaz sur ladite première face de la bande (10), immédiatement en avant de la zone d'incidence du rayonnement laser.

10. Appareil selon la revendication 9, charactérisé en ce que le jet de gaz provenant desdits moyens (80) à ajutage à gaz est en forme d'éventail dans un plan perpendiculaire à la direction de transport de la bande (10), le centre de l'éventail étant sensiblement en alignement avec le centre de la zone d'incidence du rayonnement laser.

11. Appareil selon l'une quelconque des revendications précédentes, caractérisé en ce que le rouleau (13) comprend au moins un cylindre (18) en matière réfractaire siliceuse monté sur des moyens métalliques (41) de support, des moyens élastiques (42) de montage reliant entre eux la matière réfractaire du cylindre (18) et les moyens métalliques (41) de support afin d'absorber toute différence de dilatation entre la matière réfractaire et le métal lorsque le rouleau 13 est chauffé, sans que des contraintes excessives soient engendrées dans la matière réfractaire.

## FIG.1.

0 061 352

FIG. 2.

2

FIG.3.

# FIG.4.

# FIG.5.

# FIG.6.

EXTRUDER INTERLOCKS

ROTATION SENSOR

R1

R1/1    START 94    STOP 95    R2

R2/1

LASER H.T.

START 96    STOP 97    R3

R3/1

LASER OUTPUT

R2/2

LASER H.T. INTERLOCK

R3/2

CALORIMETER INTERLOCK